Europäisches Patentamt

European Patent Office

Office européen des brevets

(11) Veröffentlichungsnummer: **0 079 034**
**A1**

# (12) EUROPÄISCHE PATENTANMELDUNG

(21) Anmeldenummer: 82110109.4

(22) Anmeldetag: 03.11.82

(51) Int. Cl.³: **B 29 C 27/20**

(30) Priorität: 11.11.81 DE 3144798

(43) Veröffentlichungstag der Anmeldung:
18.05.83 Patentblatt 83/20

(84) Benannte Vertragsstaaten:
DE FR GB NL

(71) Anmelder: HOECHST AKTIENGESELLSCHAFT
Postfach 80 03 20
D-6230 Frankfurt/Main 80(DE)

(72) Erfinder: Schädlich, Günther
Erbsenacker 13
D-6200 Wiesbaden(DE)

(54) Verfahren zum Herstellen eines umhüllten Körpers.

(57) Es wird ein Verfahren zum Herstellen eines mit einer Schlauchfolie umhüllten Körpers beschrieben, bei dem eine schrumpffähige, Knickkanten aufweisende Schlauchfolie aus einem thermoplastischen Homo-, Co- oder Mischpolymerisat auf den Körper aufgezogen und zum Aufschrumpfen erwärmt wird. Die Schlauchfolie wird vor dem Aufziehen, vorzugsweise mit Hilfe eines Zwischenkörpers, umgestülpt, so daß die Knickkanten körperwärts weisen.

FIG. 3b

HOECHST AKTIENGESELLSCHAFT
KALLE Niederlassung der Hoechst AG

- 2 -

Es war deshalb Aufgabe der vorliegenden Erfindung, ein Verfahren zum Herstellen von umhüllten Körpern zu schaffen, durch das die Umhüllung mit einer Schlauchfolie so erfolgt, daß sich Knickkanten am umhüllten Körper optisch oder elektrostatisch nicht mehr nachteilig bemerkbar machen.

Die Lösung dieser Aufgabe geht von einem Verfahren der eingangs genannten Art aus und ist dadurch gekennzeichnet, daß vor dem Aufziehen die Schlauchfolie zum beim Aufziehen Körperwärtsweisen ihrer Knickkanten umgestülpt wird. Es hat sich hierbei als vorteilhaft erwiesen, daß das Umstülpen der Schlauchfolie durch Aufziehen auf einen Zwischenkörper durchgeführt wird, von dem die umgestülpte Schlauchfolie auf den Körper aufgezogen wird.

Durch das erfindungsgemäße Verfahren wird erreicht, daß man in einfacher Weise und mit großer Sicherheit nunmehr Körper mit schrumpffähigen Schlauchfolien umhüllen kann, die nach Aufschrumpfen der Folie keine Fehlstellen, etwa durch unerwünschte Lufteinschlüsse an den Stellen der Knickkanten, mehr aufweisen.

Das erfindungsgemäße Verfahren wird beispielsweise in der Reproduktionstechnik zur Herstellung von Photoleitertrommeln aus einem metallischen Zylinder und einer aufgebrachten photoleitfähigen Schicht mit Schutzfolie angewendet und wird hieran beispielsweise beschrieben.

HOECHST AKTIENGESELLSCHAFT
KALLE Niederlassung der Hoechst AG

- 3 -

Als Körper, die umhüllt werden können und im fertigen Zustand keine Spuren von Knickkanten mehr aufweisen, sind
im allgemeinen solche mit einer glatten Oberfläche geeignet, zum Beispiel aus Materialien, wie Metall, Holz oder
Glas. Sie besitzen in der Regel zylindrische, prismatische oder würfelförmige Gestalt.

Bei der Anwendung des erfindungsgemäßen Verfahrens auf
Photoleitertrommeln wird durch die aufzubringende Schutzfolie über die gesamte Arbeitsfläche ein störungsfreier
Verbund gewährleistet.

Als Ausgangsmaterialien für die schrumpffähige Schlauchfolie kommen thermoplastische Polymerisate aus Polyvinylchlorid, dessen Co- oder Mischpolymerisate, Polyolefin
wie Polyethylen, Polypropylen, Polyester, deren Co- oder
Mischpolymerisate in Frage. Vorzugsweise werden schrumpffähige Schlauchfolien auf Basis von Polyethylenterephthalat eingesetzt.

Die Dicke der erfindungsgemäß einsetzbaren schrumpffähigen Schlauchfolie ist nicht kritisch. Bei größeren
Stärken ist lediglich eine längere Erwärmung zum Durchwärmen der Schlauchfolie notwendig. Es hat sich jedoch
als vorteilhaft erwiesen, Folienstärken im Bereich
zwischen etwa 10 und 100 $\mu$m, ganz besonders zwischen 20
und 50 $\mu$m, einzusetzen.

Das Erwärmen der aufgezogenen Schlauchfolie kann zum Beispiel durch Einwirkung von Heißwasser oder Heißluft erfolgen. Die Temperaturen liegen dabei im allgemeinen im Bereich zwischen etwa 80 und 150°C. Das Aufschrumpfen erfolgt unter Durchmesser- und/oder Längsverkleinerung auf den Körper, je nach dem, ob die schrumpffähige, mit Knickkanten behaftete Schlauchfolie monoaxial in Längs- oder Querrichtung oder auch biaxial streckorientiert ist.

Die erfindungsgemäß einsetzbaren Schlauchfolien sind, je nach ihrem Verwendungszweck, klar oder undurchsichtig, je nach dem man den thermoplastischen Polymerisaten entsprechende Zusätze, wie Mattierungsmittel, Gleitmittel, elektrisch oder photoelektrisch leitfähig machende Substanzen beigefügt hat.

Zur Durchführung des erfindungsgemäßen Verfahrens hat es sich als vorteilhaft erwiesen, das Aufziehen der umgestülpten, schrumpffähigen Schlauchfolie mit Hilfe eines Zwischenkörpers vorzunehmen, von dem dann die umgestülpte Schlauchfolie auf den Körper aufgezogen wird.

Als Zwischenkörper dient hierbei ein solcher, der mindestens in seinem Querschnitt dem Körper angepaßte Dimensionen besitzt. Ist der zu umhüllende Körper etwa eine Trommel, so kann hierzu ein zylindrischer Zwischenkörper, wie eine Stange oder ein Rohr, dienen.

Es hat sich als besonders vorteilhaft erwiesen, beim Aufziehen auf eine Trommel die Schlauchfolie zunächst durch ein Rohr zu ziehen und an seinem Ende in Umkehrung der ursprünglichen Richtung über die Außenflächen des Rohres

HOECHST AKTIENGESELLSCHAFT
KALLE Niederlassung der Hoechst AG

- 5 -

zu ziehen und dann auf den zu umhüllenden Körper aufzubringen.

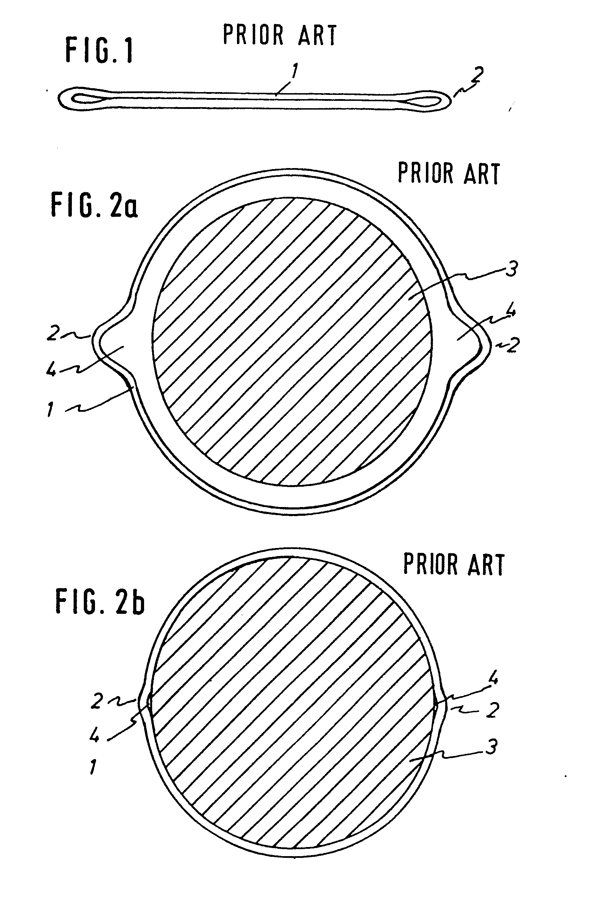

Die beigefügten Figuren sollen das erfindungsgemäße Verfahren näher erklären. Figur 1 gibt schematisch schrumpffähige Schlauchfolie 1 mit Knickkanten 2 im Querschnitt wieder. Nach bekannten Verfahren wird, wie in Figur 2a gezeigt, die Schlauchfolie 1 auf einen zu beschrumpfenden, zylindrischen Körper 3 aufgezogen. In Figur 2b ist der mit Folie durch Schrumpfen umhüllte Körper gezeigt, wobei die Knickkanten 2 an den Stellen 4 zum Beispiel als Luftkeile oder als kleine Knicke erkennbar sind. Die Knickkanten sind zwar kleiner geworden; es bleiben jedoch meist kleine Knicke vorhanden.

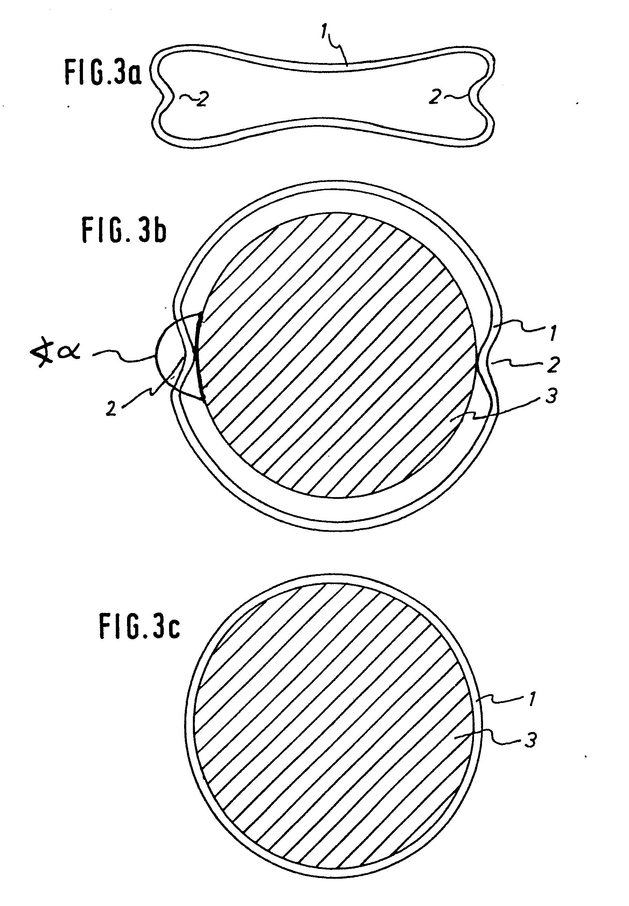

Figur 3a zeigt schematisch eine nach dem erfindungsgemäßen Verfahren umgestülpte schrumpffähige Schlauchfolie, die auf einen, wie in Figuren 2a und b gezeigten, zylindrischen Körper aufgezogen wurde. Die ursprünglichen Knickkanten weisen körperwärts (Figur 3b) und wurden beim Aufziehen überdehnt, indem sie unter einem Winkel $\alpha$ von über 180° Zugkräften ausgesetzt wurden. Figur 3c gibt den erfindungsgemäß beschrumpften Körper 3 wieder. Die sonst produktionsbedingt entstandenen Knickkanten sind vermieden. Es zeigen sich keine Fehlstellen, die zum Beispiel Luft einschließen. Die Knickkanten sind vielmehr fest an den zu beschrumpfenden Körper 3 angezogen.

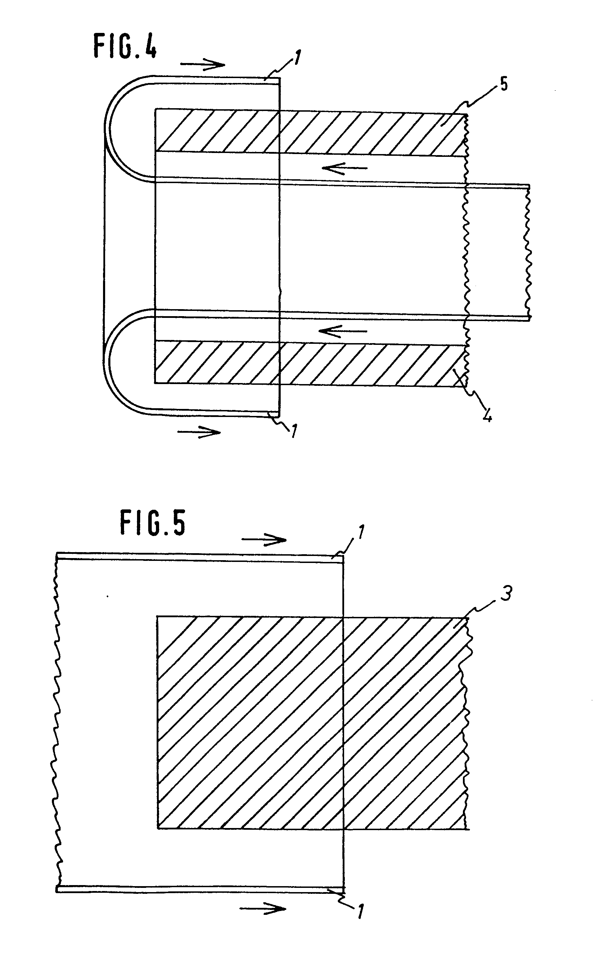

Figur 4 deutet prinzipiell die Durchführung des erfindungsgemäßen Verfahrens mit Hilfe eines Zwischenkörpers

HOECHST   AKTIENGESELLSCHAFT
KALLE   Niederlassung der Hoechst AG

- 6 -

an. Durch das Rohr 5 wird die schrumpffähige Schlauchfolie 1 geführt und an seinem Ende über die Außenflächen
des Rohres zurückgezogen und auf den Körper 3, wie in
Figur 5 gezeigt, aufgezogen.

Der Schrumpfprozeß durch Erwärmen wird anschließend wie
üblich durchgeführt.

Anhand von Beispielen zur Herstellung von Photoleitertrommeln mit Schutzfolie für ein elektrophotographisches
Kopiergerät wird die Erfindung weiter erläutert.

Beispiel 1
Eine 20 /um dicke monoaxial streckorientierte, mit Knickkanten behaftete Schlauchfolie aus Polyethylenterephthalat mit einem Durchmesser von 130 mm wird gewendet und
über eine Photoleitertrommel, bestehend aus einem Aluminiumkern von 120 mm Durchmesser und einer aufgebrachten,
etwa 50 /um dicken photoleitfähigen Schicht aus Selen,
gezogen. Das Aufschrumpfen der Folie erfolgt innerhalb
einiger Minuten durch Warmluft von etwa 100°C. Dabei
wirkt der Aluminiumkern als Temperatursenke, so daß die
Photoleiterschicht nicht übermäßig erwärmt wird. Durch
die Erwärmung zieht sich der Schrumpfschlauch fest und
glatt und ohne Knickkanten zu hinterlassen, an die Photoleiteroberfläche an.

Die mit der Folie überzogene Photoleitertrommel besitzt
keine Fehlstellen und kann, ohne Störungen zu verursachen, in einem Kopiergerät verwendet werden.

HOECHST AKTIENGESELLSCHAFT
KALLE Niederlassung der Hoechst AG

- 7 -

## Beispiel 2

Eine 40 /um dicke schrumpffähige Schlauchfolie aus Polyethylenterephthalat, die durch Aufwickeln Knickkanten aufweist, wird durch ein Rohr gezogen und an dessen Ende umgestülpt und über die Rohraußenseite zurückgezogen. Die so gewendete Schlauchschrumpffolie wird dann über eine Photoleitertrommel gezogen. Man bringt anschließend das Ganze in Wasser von 90 - 95°C über einige Minuten zum Schrumpfen bis sich die Folie fest an die Trommel anlegt.

Nach Trocknen resultiert eine mit Schutzschicht überzogene Photoleitertrommel, bei der sich eine glatte Oberfläche ergibt, ohne daß noch Spuren der Knickkanten vorhanden sind. Die Trommel ist in einem Kopiergerät störungsfrei verwendbar.

-----

HOECHST AKTIENGESELLSCHAFT
KALLE Niederlassung der Hoechst AG

P 31 44 798.8-16    - 8 -    1. November 1982
                              WLK-Dr.S-sk
                              Hoe 81/K 066

Patentansprüche

1. Verfahren zum Herstellen eines mit einer Schlauchfolie umhüllten Körpers, bei dem eine schrumpffähige, Knickkanten aufweisende Schlauchfolie aus einem thermoplastischen Homo-, Co- oder Mischpolymerisat auf den Körper aufgezogen und zum Aufschrumpfen erwärmt wird, dadurch gekennzeichnet, daß vor dem Aufziehen die Schlauchfolie zum beim Aufziehen Körperwärtsweisen ihrer Knickkanten umgestülpt wird.

2. Verfahren nach Anspruch 1, dadurch gekennzeichnet, daß das Umstülpen der Schlauchfolie durch Aufziehen auf einen Zwischenkörper durchgeführt wird, von dem die umgestülpte Schlauchfolie auf dem Körper aufgezogen wird.

-----

FIG.1   PRIOR ART

FIG. 2a   PRIOR ART

FIG. 2b   PRIOR ART

FIG.3a

1

2

2

FIG.3b

∢α

2

1

2

3

FIG.3c

1

3

FIG.4

FIG.5

Europäisches Patentamt

## EUROPÄISCHER RECHERCHENBERICHT

| | EINSCHLÄGIGE DOKUMENTE | | EP 82110109.4 |
|---|---|---|---|
| **Kategorie** | Kennzeichnung des Dokuments mit Angabe, soweit erforderlich, der maßgeblichen Teile | **Betrifft Anspruch** | **KLASSIFIKATION DER ANMELDUNG (Int. Cl. ³)** |
| A | US - A - 3 481 805 (HOLMES)<br>* Gesamt *<br><br>-- | . | B 29 C 27/20 |
| A | US - A - 3 749 621 (SHOFFNER)<br>* Gesamt *<br><br>-- | | |
| A,D | US - A - 3 906 070 (LAJOVIC)<br>* Gesamt *<br><br>---- | | |

| RECHERCHIERTE SACHGEBIETE (Int. Cl. -) |
|---|
| B 29 C 13/00 |
| B 29 C 27/00 |

X  Der vorliegende Recherchenbericht wurde für alle Patentansprüche erstellt.

| Recherchenort | Abschlußdatum der Recherche | Prüfer |
|---|---|---|
| WIEN | 28-01-1983 | MAYER |